# FASCICULE DE BREVET EUROPEEN

(11) **EP 2 349 802 B1**
(45) Date de publication et mention de la délivrance du brevet: **14.11.2012**
(21) Numéro de dépôt: 09740372.9
(22) Date de dépôt: 23.07.2009
(51) Int. Cl.: B60T 7/12, B60W 30/18

(54) **PROCEDE DE SECURISATION DU FONCTIONNEMENT D'UN VEHICULE AUTOMOBILE POURVU D'UNE ASSISTANCE AU DEMARRAGE EN COTE ET UN TEL VEHICULE AUTOMOBILE**
VERFAHREN ZUR SICHERUNG DES BETRIEBS EINES MIT BERGANFAHRHILFE AUSGESTATTETEN FAHRZEUGS SOWIE SOLCH EIN FAHRZEUG
METHOD FOR SECURING THE OPERATION OF AN AUTOMOBILE PROVIDED WITH HILL START ASSIST, AND SUCH AN AUTOMOBILE

(30) Priorité: 08.09.2008 FR 0856005
(43) Date de publication de la demande: 03.08.2011
(73) Titulaire: Renault S.A.S., 92100 Boulogne-Billancourt (FR)
(72) Inventeur: FEBRER, Pascal, F-75014 Paris (FR); MONTI, Alessandro, F-92250 La Garenne Colombes (FR)
(86) Numéro de dépôt international: PCT/FR2009/051484
(87) Numéro de publication internationale: WO 2010/026324

(56) Documents cités:
- WO-A-2004/058551
- DE-A1- 10 159 863
- GB-A- 2 389 090
- US-A1- 2003 154 952
- US-A1- 2004 043 859

## Description

### DOMAINE TECHNIQUE

La présente invention concerne un procédé de sécurisation du fonctionnement d'un véhicule automobile équipé d'une assistance au démarrage en côte, ainsi qu'un tel véhicule automobile.

Lorsqu'un véhicule automobile est à l'arrêt dans une côte, il est souvent difficile, voire parfois dangereux, de faire démarrer ce véhicule dans le sens ascendant. Pour bien des conducteurs, les démarrages en côte dans le sens ascendant sont de ce fait une source importante de stress.

Lors d'un démarrage en côte, le conducteur doit éviter autant que possible un recul de son véhicule, sans faire caler le moteur d'entraînement de ce véhicule et, pour ce faire, il lui faut combiner deux actions qui sont le desserrage des freins et l'accouplement progressif des roues d'entraînement du véhicule au moteur d'entraînement de ce véhicule.

C'est pourquoi des dispositifs de contrôle et de commande généralement appelés « dispositifs d'aide au démarrage en côte » ou « dispositif d'assistance au démarrage » ont été étudiés pour faciliter la tâche du conducteur lors d'un démarrage en côte, en gérant ce démarrage à sa place.

### TECHNIQUES ANTERIEURES

GB 2389090 décrit un dispositif d'assistance au démarrage en côte comprenand toutes les caractéristiques du préambule de la revendication 1.

Dans un dispositif d'assistance au démarrage en côte, un calculateur pilote le desserrage des freins du véhicule à partir de différentes informations telles que des mesures en provenance de plusieurs capteurs. Pour ce faire, il met en oeuvre une stratégie spécifique, telle que celle décrite dans la demande de brevet français FR-2 828 450 ou celle décrite dans la demande de brevet français FR-2 841 199.

Parmi les stratégies actuellement disponibles d'exécution d'une aide au démarrage en côte, toutes ne sont pas aussi performantes. En outre, certaines sont plus appropriées que d'autres en fonction du type de véhicule concerné et de ses particularités. Parallèlement, certaines failles des dispositifs actuellement proposés d'aide au démarrage en côte peuvent ne pas avoir encore été décelées.

La présente invention s'inscrit donc dans une démarche générale de recherche d'améliorations possibles dans les dispositifs d'aide au démarrage en côte, notamment en matière de sûreté de fonctionnement.

### RESUME DE L'INVENTION

L'invention a pour objet un procédé de sécurisation du fonctionnement d'un véhicule automobile équipé d'un groupe motopropulseur pour son entraînement et d'un dispositif de mise en oeuvre d'une assistance au démarrage en côte. Dans ce procédé, suite à une commande de démarrage ou de mise en mouvement du véhicule, on examine au moins une condition avant d'exécuter une assistance au démarrage en côte et on empêche l'exécution de cette assistance au démarrage en côte si ladite condition est réalisée.

Grâce au procédé défini ci-dessus, l'assistance au démarrage en côte est empêchée lorsque l'on se trouve dans un cas où elle pourrait avoir des conséquences néfastes. On s'est aperçu qu'un tel cas avait lieu lorsque le groupe motopropulseur d'entraînement du véhicule est en phase d'arrêt sans être encore totalement arrêté. Or, ce cas peut être rencontré dans des véhicules automobiles de nouvelle génération dont le moteur ne s'arrête pas immédiatement en réponse à une commande d'arrêt, mais seulement après que plusieurs tests déclenchés par cette commande d'arrêt ont été menés jusqu'à leurs termes.

Si une commande d'arrêt a été déclenchée accidentellement sans que le conducteur du véhicule automobile en ait conscience, ce conducteur peut vouloir effectuer un démarrage pendant la phase d'arrêt du groupe motopropulseur du véhicule. Grâce à l'invention, il peut être empêché que l'assistance au démarrage en côte s'exécute dans un tel cas, afin d'éviter un possible disfonctionnement de l'ensemble et/ou un accident pouvant par exemple résulter d'un desserrage malencontreux des freins de stationnement du véhicule.

Un autre cas où une exécution de l'assistance au démarrage en côte peut conduire à un disfonctionnement est celui d'une défaillance d'au moins un dispositif fournissant une donnée employée par l'assistance au démarrage en côte. Grâce à l'invention, un tel disfonctionnement peut également être écarté.

L'invention peut également servir à éviter une mise en route de l'assistance au démarrage en côte alors qu'une portière du véhicule automobile est encore ouverte ou bien tandis que ce véhicule est dans une autre configuration normale à l'arrêt, mais dangereuse ou autrement rédhibitoire à pleine vitesse.

Aussi, ladite condition est avantageusement choisie parmi le fait qu'un arrêt du groupe motopropulseur est en cours, le fait qu'une information employée pour mettre en oeuvre l'assistance au démarrage en côte est considérée comme non valide, le fait qu'il est détecté une anomalie dans le dispositif de mise en oeuvre de l'assistance au démarrage en côte et le fait qu'il est détecté que le véhicule se trouve dans une configuration possible durant une immobilisation du véhicule, mais proscrite lorsque le véhicule est en mouvement.

Avantageusement, la condition est qu'un arrêt du groupe motopropulseur est en cours. Dans ce cas, elle est avantageusement considérée comme réalisée à compter d'une commande d'arrêt du groupe motopropulseur et seulement tant que ne s'est pas produite au moins l'une de trois situations qui sont :
- que le groupe motopropulseur est à l'arrêt tandis qu'aucune commande d'arrêt du groupe motopropulseur n'a lieu ;
- que, depuis la dernière commande d'arrêt du groupe motopropulseur, une durée prédéterminée ne s'est pas entièrement écoulée, tandis qu'aucune commande d'arrêt du groupe motopropulseur n'a lieu ; et
- que la vitesse du véhicule automobile est supérieure à une vitesse prédéterminée, tandis qu'aucune commande d'arrêt du groupe motopropulseur n'a lieu.

Avantageusement, on examine ladite condition et au moins une autre condition, c'est-à-dire plusieurs conditions différentes, et on empêche une exécution de l'assistance au démarrage en côte si au moins l'une de ces conditions différentes est réalisée.

Avantageusement, on arrête d'empêcher une exécution de l'assistance au démarrage en côte si ladite condition n'est plus réalisée.

L'invention a également pour objet un véhicule automobile, comprenant un groupe motopropulseur pour son entraînement et un dispositif de mise en oeuvre d'une assistance au démarrage en côte, ce dispositif de mise en oeuvre d'une assistance au démarrage en côte étant conçu pour examiner au moins une condition suite à une commande de démarrer le véhicule et pour ne pas exécuter l'assistance au démarrage en côte si cette condition n'est pas réalisée.

Pour les mêmes raisons que celles exposées précédemment, ce véhicule automobile possède un fonctionnement dont la sûreté est améliorée.

Avantageusement, le dispositif de mise en oeuvre d'une assistance au démarrage en côte du véhicule automobile est conçu pour mettre en oeuvre un procédé tel que défini précédemment.

### DESCRIPTION SOMMAIRE DES FIGURES

L'invention sera bien comprise à la lecture de la description qui va suivre, donnée à titre d'exemple non limitatif et faite en se référant aux dessins annexés, parmi lesquels :
- la figure 1 est un schéma simplifié d'un véhicule automobile qui est équipé d'une assistance au démarrage en côte et qui est conforme à l'invention ;
- la figure 2 est un schéma synoptique de la logique de fonctionnement d'un procédé conforme à l'invention et prévu pour sécuriser le fonctionnement du véhicule automobile de la figure 1 ; et
- la figure 3 est un schéma synoptique de la logique de fonctionnement d'une évaluation de ce qu'un arrêt du groupe motopropulseur d'entraînement du véhicule automobile représenté à la figure 1 est ou non en cours.

### MANIERE POSSIBLE DE REALISER L'INVENTION

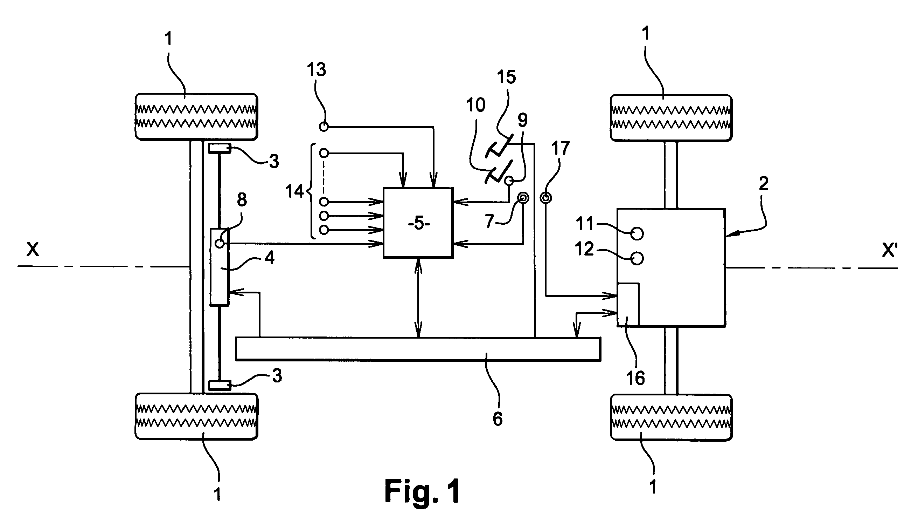

Sur la figure 1, un véhicule automobile est symbolisé par ses quatre roues **1** et par son groupe motopropulseur d'entraînement **2,** qui est accouplé à plusieurs roues **1** et qui comprend classiquement un moteur, tel qu'un moteur thermique ou électrique ou bien hybride, une boîte de vitesses et un embrayage ou un dispositif équivalent.

Dans ce qui suit et dans les revendications annexées, les termes « avant », « arrière », « antéropostérieur », ainsi que les termes analogues, se réfèrent au sens normal de progression du véhicule automobile.

Le véhicule automobile représenté à la figure 1 comprend des freins de stationnement à commande électrique **3,** dont chacun est associé à une roue **1** et qu'un actionneur électrique **4** est à même de manoeuvrer entre une position serrée d'immobilisation du véhicule à l'arrêt et une position desserrée ou neutre.

Un calculateur **5** pilote l'actionneur électrique **4,** auquel il est relié par un bus **6** tel qu'un bus de type CAN (marque commerciale), ayant pour fonction la transmission de données. Ce bus **6** relie également le calculateur **5** et le groupe motopropulseur **2** l'un à l'autre.

Le calculateur **5** est conçu pour gérer automatiquement le freinage de stationnement du véhicule automobile, en commandant un serrage des freins **3** dès que le véhicule est à l'arrêt et jusqu'à ce que le conducteur commande un démarrage de ce véhicule. En d'autres termes, le véhicule automobile est pourvu de la fonction généralement appelée « frein de stationnement automatique ». Le conducteur peut également commander lui-même un serrage ou un desserrage des freins de stationnement **3,** en appuyant sur un bouton **7** relié au calculateur **5.**

Le calculateur **5** est également à même de mettre en oeuvre une fonction d'assistance au démarrage en côte équipant le véhicule automobile. A cet effet, ce calculateur **5** est relié à plusieurs capteurs, dont un capteur **8** de mesure ou d'estimation de la pression de serrage des freins de stationnement **3,** un capteur **9** de détection de la position d'une pédale d'embrayage **10,** un capteur **11** de détection du rapport de vitesse dans la boite de vitesses du groupe motopropulseur **2,** un capteur **12** de détection de la vitesse de rotation du moteur du groupe motopropulseur **2** et un capteur **13** de mesure de l'inclinaison de l'axe antéropostérieur **X-X'** du véhicule par rapport à l'horizontale. La référence **14** désigne plusieurs autres capteurs qui sont susceptibles de fournir des mesures ou d'autres informations au calculateur **5** et parmi lesquels on compte un capteur de la vitesse du véhicule automobile, un capteur du couple fourni par le moteur de ce véhicule et des capteurs des vitesses de rotation respectives des roues accouplées au groupe motopropulseur **2.** Des informations quant à la position de la pédale d'accélérateur **15** du véhicule parviennent également au calculateur **5,** via le bus **6,** auquel est connectée cette pédale d'accélérateur **15.**

Le groupe motopropulseur **2** comporte un calculateur **16** de pilotage du fonctionnement de son moteur. Un bouton **17** de commande de l'arrêt ou de la mise en marche de ce moteur est connecté au calculateur **16.**

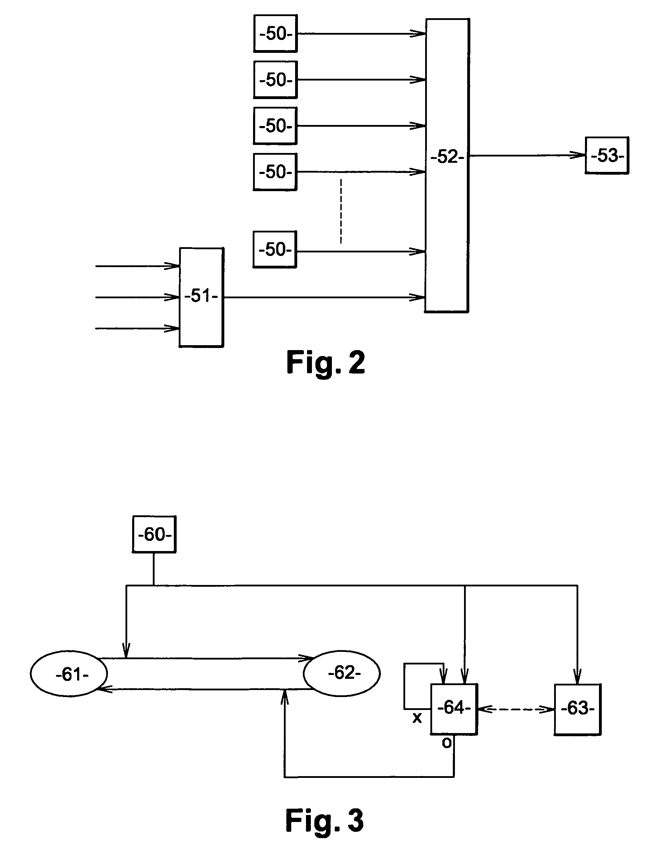

Le calculateur **5** est à même de gérer un démarrage du véhicule à la place du conducteur, d'une manière connue en soi, par exemple de la manière proposée dans la demande de brevet français FR-2 828 450. Lorsqu'elle reçoit ou déduit une commande de la part du conducteur d'effectuer un tel démarrage, ce calculateur **5** commence par vérifier si plusieurs conditions sont toutes réunies, ce qu'illustre la figure 2.

Sur cette figure 2, les références **50** et **51** désignent des tests sur les conditions devant être réunies. A l'un des tests **50,** on vérifie par exemple si l'information reçue par le calculateur **5** concernant la vitesse de rotation du moteur est ou non valide. A un autre test **50,** on peut vérifier si l'information reçue par le calculateur **5** concernant la position de la pédale d'accélérateur **15** est ou non valide.

Plus précisément, le contenu des tests **50** et **51** est choisi en fonction de la stratégie ou logique selon laquelle procède le calculateur **5** pour piloter l'assistance au démarrage en côte. L'état du moteur soit tournant, soit arrêté ou entraîné par le démarreur, la validité ou non de l'information relative à la vitesse du véhicule, la validité ou non de l'information relative à l'inclinaison du véhicule, la validité ou non de l'information relative à la position de la pédale d'embrayage, la validité ou non de l'information relative au couple fourni par le moteur, la validité ou non de l'information relative aux vitesses de rotation des roues **1** accouplées au groupe motopropulseur **2** et la validité ou non de l'information relative au rapport de vitesse sélectionné dans la boîte de vitesses sont d'autres exemples des résultats que peuvent produire les tests **50.**

La validité d'une information reçue par le calculateur **5** peut être testée de différentes manières connues en elles-mêmes. Par exemple, une information peut être considérée comme non valide dans le cas où il s'agit d'une valeur en dehors de la plage normale de variation de cette valeur, dans le cas où elle n'est pas cohérente avec une autre information reçue par le calculateur **5** et/ou dans le cas où elle n'est pas reçue pendant plusieurs trames successives d'envoi d'informations par le bus **6.**

Dans un test **50,** il peut également être vérifié si les paramètres selon lesquels est configuré l'algorithme d'assistance au démarrage en cote sont corrects ou bien corrompus.

Dans un test **50,** il peut encore être vérifié l'existence ou non d'une condition qu'il est normal de rencontrer pendant un arrêt du véhicule, mais qui s'oppose au démarrage du véhicule et qui, par exemple, peut être qu'une porte du véhicule n'est pas fermée ou pas correctement fermée.

Le test **51** s'intéresse à l'enclenchement éventuel d'un processus d'arrêt du moteur constitutif du groupe motopropulseur **2.**

En appuyant sur le bouton **17,** le conducteur peut en effet envoyer une commande d'arrêter le moteur au calculateur **16** et déclencher ainsi un tel processus. A réception de cette commande, le calculateur **16** ne provoque pas immédiatement l'arrêt effectif du moteur. Auparavant, il effectue plusieurs tests, si bien que le moteur du véhicule reste en fonctionnement pendant une certaine durée entre une action sur le bouton **17** et l'arrêt du moteur. Pendant cette durée, le calculateur **5** ne doit pas faire démarrer le véhicule, ni faire desserrer les freins de stationnement **3.** Or, tant que le moteur n'est pas totalement arrêté, le conducteur peut avoir oublié qu'il a commandé un arrêt du moteur et vouloir faire démarrer le véhicule. Le même type de situation peut se produire également lorsque l'action sur le bouton **17** est accidentelle en sorte que, ne sachant pas qu'un processus d'arrêt du moteur a été déclenché, le conducteur peut vouloir faire démarrer le véhicule pendant ce processus d'arrêt du moteur.

Afin d'éviter que le calculateur **5** fasse démarrer le véhicule alors que son moteur est en train d'être arrêté, ce calculateur **5** vérifie au test **51** s'il doit être ou non considéré qu'un arrêt du moteur est en cours. La figure 3 illustre comment il est déterminé qu'un arrêt du moteur est ou non en cours.

Sur cette figure 3, la référence **60** désigne une action sur le bouton **17,** c'est-à-dire une commande manuelle d'arrêter le moteur. Cette commande manuelle **60** fait passer de l'état **61,** dans lequel il est considéré qu'aucun arrêt du moteur n'est en cours, à l'état **62,** dans lequel il est considéré que le moteur est en train d'être arrêté. La commande manuelle d'arrêt **60** déclenche une étape **63,** dans laquelle on initialise puis on décompte une temporisation. La commande manuelle d'arrêt **60** provoque en outre le démarrage d'un triple test **64** dans lequel sont examinées trois conditions. Le triple test **64** est réitéré régulièrement jusqu'à ce que l'une au moins de ces trois conditions soit réalisée, auquel cas on revient à l'état **61,** en considérant qu'il n'y a plus d'arrêt du moteur en cours.

Le premier fait qui peut faire revenir à l'état **61** est que la vitesse du véhicule automobile est supérieure à une vitesse prédéterminée tandis qu'aucune commande manuelle d'arrêt **60** n'a lieu. Le deuxième fait pouvant faire revenir à l'état **61** est que la temporisation ou durée prédéterminée décomptée à l'étape **63** s'est entièrement écoulée tandis qu'aucune commande manuelle d'arrêt **60** n'a lieu. Le troisième fait pouvant faire revenir à l'état **61** est un arrêt complet du moteur alors qu'aucune commande manuelle d'arrêt **60** du moteur n'a lieu. En d'autres termes, le test **64** fait passer de l'état **62** à l'état **61** s'il n'y a pas de demande d'arrêt du moteur et si, parallèlement, la vitesse du véhicule automobile est supérieure à une vitesse prédéterminée et/ou le décompte effectué à l'étape **63** n'est pas arrivé à terme et/ou le moteur est à l'arrêt complet. Bien entendu, toute nouvelle commande manuelle d'arrêt **60** réinitialise le décompte qui s'opère à l'étape **63.**

Le calculateur **5** enregistre une information indiquant dans lequel des deux états **61** et **62** se trouve le véhicule. Au test **51,** il interroge cette information.

Ainsi qu'on peut le voir sur la figure 2, le calculateur **5** effectue une synthèse **52** des résultats des tests **50** et **51.** Si au moins l'un de ces résultats indique que le véhicule ne doit pas être démarré, le calculateur **5** ne donne pas suite à la commande de démarrer le véhicule. Si aucun des résultats des étapes **50** et **51** ne s'oppose à un démarrage du véhicule automobile, le calculateur **5** met en oeuvre l'assistance au démarrage en côte **53** d'une manière connue en soi, par exemple selon l'enseignement de la demande de brevet français FR-2 828 450 ou selon l'enseignement de la demande de brevet français FR-2 841 199 ou bien encore de toute autre manière appropriée.

Il ressort de ce qui précède que l'assistance au démarrage en côte **53** n'est pas mise en oeuvre dans certains cas où elle pourrait conduire à un disfonctionnement, voire à un accident.

## Revendications

1. Procédé de sécurisation du fonctionnement d'un véhicule automobile équipé d'un groupe motopropulseur (2) pour son entraînement et d'un dispositif (5) de mise en oeuvre d'une assistance au démarrage en côte, dans lequel, suite à une commande de démarrage du véhicule, on examine (50,51,52) au moins une condition avant d'exécuter une assistance au démarrage en côte (53) et dans lequel on empêche l'exécution de cette assistance au démarrage en côte (53) si ladite condition est réalisée, ***caractérisé* en ce que** ladite condition est qu'un arrêt du groupe motopropulseur (2) est en cours.

2. Procédé de sécurisation selon la revendication 1, dans lequel ladite condition est considérée comme réalisée à compter d'une commande (60) d'arrêt du groupe motopropulseur (2) et seulement tant que ne s'est pas produite au moins l'une de trois situations qui sont :
- que le groupe motopropulseur (2) est à l'arrêt tandis qu'aucune commande (60) d'arrêt du groupe motopropulseur (2) n'a lieu ;
- que, depuis la dernière commande (60) d'arrêt du groupe motopropulseur (2), une durée prédéterminée ne s'est pas entièrement écoulée, tandis qu'aucune commande (60) d'arrêt du groupe motopropulseur (2) n'a lieu ; et
- que la vitesse du véhicule automobile est supérieure à une vitesse prédéterminée, tandis qu'aucune commande (60) d'arrêt du groupe motopropulseur (2) n'a lieu.

3. Procédé de sécurisation selon l'une quelconque des revendications précédentes, dans lequel on examine ladite condition et au moins une autre condition, c'est-à-dire plusieurs conditions différentes, et on empêcher une exécution de l'assistance au démarrage en côte (53) si au moins l'une de ces conditions différentes est réalisée.

4. Procédé de sécurisation selon l'une quelconque des revendications précédentes, dans lequel on arrête d'empêcher une exécution de l'assistance au démarrage en côte si ladite condition n'est plus réalisée.

5. Véhicule automobile, comprenant un groupe motopropulseur (2) pour son entraînement et un dispositif (5) de mise en oeuvre d'une assistance au démarrage en côte (53) conçu pour mettre en oeuvre un procédé selon l'une quelconque des revendications 1 à 4.

## Claims

1. Method for making safe the operation of a motor vehicle fitted with a drive train (2) for driving it and a device (5) for applying a hill-start assist, wherein, following a command to start the vehicle, at least one condition is examined (50, 51, 52) before a hill-start assist (53) is executed and wherein the execution of this hill-start assist (53) is prevented if said condition is fulfilled, **characterized in that** said condition is that stopping of the drive train (2) is in progress.

2. Method for making safe according to claim 1, wherein said condition is considered to be fulfilled from the time of a command (60) to stop the drive train (2) and only for as long as at least one of three situations has not occurred, which situations are:
- that the drive train (2) is stopped while no command (60) to stop the drive train (2) has been given;
- that, since the last command (60) to stop the drive train (2), a predetermined time has not fully elapsed, while no command (60) to stop the drive train (2) has been given; and
- that the speed of the motor vehicle is higher than a predetermined speed, while no command (60) to stop the drive train (2) has been given.

3. Method for making safe according to either one of the preceding claims, wherein said condition and at least one other condition, that is to say a number of different conditions, are examined and an execution of the hill-start assist (53) is prevented if at least one of these different conditions is fulfilled.

4. Method for making safe according to any one of the preceding claims, wherein an execution of the hill-start assist is stopped from being prevented if said condition is no longer fulfilled.

5. Motor vehicle, comprising a drive train (2) for driving it and a device (5) for applying a hill-start assist (53) designed to apply a method according to any one of Claims 1 to 4.

## Patentansprüche

1. Verfahren zur Sicherung des Betriebs eines Kraftfahrzeugs, das mit einer Antriebseinheit (2) für seinen Antrieb und mit einer Vorrichtung (5) zur Durchführung einer Berganfahrhilfe ausgestattet ist, bei dem nach einem Startbefehl des Fahrzeugs mindestens eine Bedingung untersucht wird (50, 51, 52), ehe eine Berganfahrhilfe ausgeführt wird (53), und bei dem die Ausführung dieser Berganfahrhilfe (53) verhindert wird, wenn die Bedingung erfüllt ist, **dadurch gekennzeichnet, dass** die Bedingung ist, dass die Antriebseinheit (2) gerade abgestellt wird.

2. Sicherungsverfahren nach Anspruch 1, bei dem die Bedingung ab einem Abstellbefehl (60) der Antriebseinheit (2), und nur so lange nicht mindestens eine der drei folgenden Situationen aufgetreten ist, als erfüllt angesehen wird:
- dass die Antriebseinheit (2) abgestellt ist, während kein Abstellbefehl (60) der Antriebseinheit (2) stattfindet;
- dass seit dem letzten Abstellfehl (60) der Antriebseinheit (2) eine vorbestimmte Zeitdauer nicht vollständig verstrichen ist, während kein Abstellbefehl (60) der Antriebseinheit (2) stattfindet; und
- dass die Geschwindigkeit des Kraftfahrzeugs höher als eine vorbestimmte Geschwindigkeit ist, während kein Abstellbefehl (60) der Antriebseinheit (2) stattfindet.

3. Sicherungsverfahren nach einem der vorhergehenden Ansprüche, bei dem die Bedingung und mindestens eine weitere Bedingung untersucht wird, d.h. mehrere unterschiedliche Bedingungen, und eine Ausführung der Berganfahrhilfe (53) verhindert wird, wenn mindestens eine dieser unterschiedlichen Bedingungen erfüllt ist.

4. Sicherungsverfahren nach einem der vorhergehenden Ansprüche, bei dem eine Ausführung der Berganfahrhilfe nicht mehr verhindert wird, wenn die Bedingung nicht mehr erfüllt ist.

5. Kraftfahrzeug, das eine Antriebseinheit (2) für seinen Antrieb und eine Vorrichtung (5) zur Durchführung einer Berganfahrhilfe (53) enthält, die konzipiert ist, um ein Verfahren nach einem der Ansprüche 1 bis 4 durchzuführen.
